# EUROPEAN PATENT APPLICATION

(11) **EP 1 270 281 A1**
(43) Date of publication of application: **02.01.2003**
(21) Application number: 01305284.0
(22) Date of filing: 18.06.2001
(51) Int. Cl.: B60C 27/06, B60C 27/10

(54) **System for installing chains on vehicle tires**

(71) Applicant: Lyne, Robert Chamberlayne, Richmond, Virginia 23233 (US)
(72) Inventor: Lyne, Robert Chamberlayne, Richmond, Virginia 23233 (US)
(74) Representative: Marlow, Nicholas Simon

(57) **Abstract**

A drive-on system for installing a tire chain (i.e., snow chain) on a pneumatic tire mounted on a vehicle wheel. The system includes a U-shaped installation tool (10) whose arms (12,14) releasably engage fastening elements (hooks or links) at one end of each side chain, and an installation tray or ramp in which the connected tire chain and tool are arranged, and may be stored, prior to installation, with the tire chain in a partially laid-out orientation and the tool preferably within a tool compartment in the tray. To install the tire chain, the vehicle is driven onto the tray and stopped, preferably in a predetermined optimum position in response to a signal initiated by a position-indicating switch on the tray. Then the tool, with one end of the tire chain connected to it and trailing it, is drawn upward and circumferentially around the tire. With the tool bridging the tread of the tire so that its arms extend along the opposite sidewalls, the tire chain is draped and tensioned substantially in the correct position on the tire. The fastening element at the other, free end of each side chain is then removed from its place in the tray and connected to the mating fastening element. The connection on the inner sidewall is preferably made while the tool is still connected, which enables the arm of the tool on the inner sidewall to be used to guide the free element into contact and connection with the element connected to the tool.

## Description

This invention pertains to the field of installing traction-enhancing chains on pneumatic tires of wheeled vehicles, for use on mud, snow, and ice surfaces.

The advantages of tire chains have been known for many years. When needed, tire chains provide enhanced traction on mud, snow, and ice surfaces, both for moving and for stopping the vehicle. Also, tire chains are relatively inexpensive and do not affect vehicle ride, handling, fuel economy, or performance when they are not necessary, which is at least 99 percent of the time for 99 percent of the people in the United States.

Also known are the disadvantages of tire chains, which, assuming well designed chains are properly selected for a given vehicle, tend to fall into three categories. The first category is installation. The disadvantages within this category include the considerable time required for installation and the physical difficulty and discomfort involved, often under adverse weather conditions, darkness, or stress. They may further include, depending upon whether a jack is employed, safety considerations or the need to re-adjust the chains after the vehicle has been driven. These disadvantages are described further in the patents identified below and in other patents in U.S. Patent and Trademark Office subclasses 152/213R and 81/15.8. The second category of disadvantages is operation of the vehicle after the chains have been installed. These disadvantages include chain wear and breakage, limitations on vehicle speed, vibration and accelerated wear of the vehicle, possible damage to the vehicle resulting from breakage of worn chains, and damage to the pavement. These disadvantages are greatly amplified by operation of the vehicle on bare pavement. The third category is removal of the chains from the tire.

These three categories of disadvantages are directly related, in that solutions to installation and removal problems ameliorate problems during vehicle operation. This is because, as a practical matter, the ability to install and remove tire chains quickly and easily enables the user to remove them as soon as the vehicle reaches bare pavement, knowing that the tire chains can be readily re-installed as soon as (or if) they are needed again. Theoretically, perfect solutions to the installation problems and removal problems would eliminate nearly all of the operating problems. That is, if tire chains could be installed instantly by a mere snap of the driver's fingers immediately before serious snow or ice are encountered, and removed in the same manner when no longer needed, their above-mentioned operating disadvantages would disappear.

Some solutions involve ramps having spaced lateral grooves. After the tire chain is laid out with its cross chains lying loosely in the grooves, the vehicle is driven onto the ramp. The grooves allow the cross chains to be adjusted to positions where the necessary degree of tension can be attained before the ends of the chain are connected. See, for example, Garey U.S. patent 2,022,804. Such drive-on ramps are most efficiently used in pairs, one pair for each pair of drive wheels. A problem presented by ramps is the difficulty of stopping the vehicle at the desired position on the ramp. One approach to solving this problem is to provide a stop for the wheel, as disclosed for example in Rhoads et al U.S. patent 2,604,802. This approach is not always effective, because under actual conditions it is difficult for the driver to feel the stop through the vehicle and distinguish it from other bumps, and he or she may drive the vehicle over the stop. A better approach is to signal the driver that the vehicle has reached the correct position, as taught for example by Masegian U.S. patent 4,194,724. Another significant improvement in ramps was the provision for storage with the chain oriented on the ramp, which Planz U.S. patent 3,893,500, "Chain Caddy", accomplished by upstanding edges on the ramp.

Other solutions to the problems of installing tire chains involve tools for engaging end elements of the chain to facilitate handling. Examples are Nakata U.S. patent 4,210,036 (hinged elongated rod) and Dalaba U.S. patent 4,703,675 (U-shaped spring clip to hold end of chain to tire during rotation to wind chain on tire). U-shaped tools have also been used with tire chains for other purposes, as shown for example by Krennwallner German patent 155,387 (tensioning device).

Other solutions avoid the use of a jack or a ramp by applying a tire chain configured so that its ends can be connected with the cross chains nearest the ends outside the footprint of the tire and no chain beneath the footprint. This involves a compromise between ideal spacing between cross chains and achieving proper tension, and usually requires driving and stopping the vehicle after the tire chains have been installed and re-adjusting them. Also, a popular way of accomplishing this installation is to use a large hoop as an integral part of each tire chain. The hoop makes the tire chain difficult to store and handle and may require extensive manipulation of the tire chain under and on the sidewalls of the tire. The hoop also makes removal of the tire chain more difficult.

Despite the large number of patents directed to solving the problems of installing a tire chain, there remains a need for a single system which is capable of performing all of the following functions:
(a) storing an oriented tire chain having conventional side chains;
(b) handling and positioning the ramp and chain with respect to the tire before the vehicle is driven;
(c) correctly positioning the tire with respect to the chain when the vehicle is stopped;
(d) placing the chain, untwisted, on the tire in approximately the correct position;
(e) adjusting and tensioning the chain;
(f) ascertaining the location of the fastening elements at the end of the chain; and
(g) positively connecting those elements.

Such a system should accomplish the foregoing in the following manner:
(h) without fumbling or unsuccessful attempts by the user;
(i) while minimizing or eliminating contact of the user's hands with the chain, or the user's body with the ground or snow;
(j) without requiring exceptional mechanical ability, strength, or dexterity on the part of the user;
(k) simply, reliably, and inexpensively; and
(l) quickly.
Generally speaking, the last requirement, "quickly", embraces many of the other requirements and will be the major factor determining the efficacy of the system.

The present invention is a drive-on system for installing tire chains, including storage and handling, on a pneumatic tire mounted on a vehicle wheel. Its object is to meet the need described above in the manner described above.

The inventive system utilizes a U-shaped installation tool having arms extending outwardly from opposite ends of a transverse body member or handle. Movable clasp mechanisms at the ends of the arms releasably but securely engage an end element at one end of each side chain. The arrangement of the elements of the tool corresponds roughly to the anatomy of a hardshell crab.

The system also utilizes a tray-like device in which the tire chain and the tool are arranged, and may be stored, in a partially laid-out orientation prior to installation. This device, which performs the function of the ramps and chain caddy referred to above, will be referred to hereinafter as an "installation tray" or "tray". The installation tray has longitudinal channels and transverse channels for holding laid-out side chains and cross chains, respectively, and a well for holding side chains and cross chains which are not laid out. The installation tray also has a compartment adjacent the well for holding the tool and protecting it from damage due to the weight of the vehicle.

The method of installing the tire chain is as follows. The untwisted tire chain is arranged in the tray with the tool connected to it, as described above. The vehicle is driven onto the tray and stopped when the vehicle is in a predetermined, optimum position with respect to the tray and chain. Holding the handle, the user draws the tool, with one end of the tire chain trailing it, upward and circumferentially around the tire. With the tool bridging the tread of the tire so that its arms extend along the opposite sidewalls, the tire chain is disposed and tensioned substantially in its correct position on the tire. The fastening element at the other, free end of each side chain is then brought up and connected to the mating fastening element. The connection of the side chain elements on the inner sidewall may be made while the tool is still connected to the fastening element, which enables the arm of the tool on the inner sidewall to be used to guide the free element into contact and connection with the element connected to the tool. In most cases this eliminates the need for the user to see the two elements being connected and the need to hold the two elements with both hands simultaneously, so that the user does not need to lie on the ground. After the tool is disconnected from the chain, the vehicle is driven off the tray.

The system according to the invention may include additional features. The inner arm of the tool may have flanges defining a channel for guiding the free fastening element into proximity and contact with the fastening element held by that arm. An inclined ramp-like surface may be disposed in that channel. The tray may have slots for locating and restraining the free fastening elements, and stacking lugs and recesses to permit a plurality of trays to be stacked during storage. A device may be provided in a recess in the tray to sense the position of the tire and initiate a signal to stop the vehicle. The position of the signal-initiating device relative to the transverse channels in the tray may be adjustable. Preferably the signal issues when, and only when, the tire is positioned within a predetermined theoretical zone defined by boundaries spaced along the longitudinal axis of the tray, so that the device is able to sense and signal the stopped position of the tire as well as the position of the tire while it is still moving. The chain elements held by the arms of the tool may be released therefrom by the action of a readily accessible latch or similar locking device controlled by the user. Force for opening the claws of the tool may be applied to the open latch. The handle of the tool may be articulated to permit the claws of the two arms, and the elements of the chain they hold, to be brought close to each other. The tool may have features which enable it to be easily adapted and used for tires of different sizes.

The invention will be further described, by way of example, with reference to the drawings, in which:
Fig. 1 is a plan view of a tool according to the invention;
Fig. 2 is a left side view of the tool shown in Fig. 1, showing the inner arm in a closed, confining position;
Fig. 3 is a view similar to Fig. 2, with the claws in an open, releasing position;
Fig. 4 is a right side view of the tool shown in Fig. 1, showing the outer arm;
Fig. 5 is a fragmentary view similar to Fig. 4, with the claws in an open, releasing position;
Fig. 6 is a view of a section taken at 6-6 in Fig. 2, along the top surface of the top member;
Fig. 6A is a view of a section taken at 6A-6A in Fig. 2;
Fig. 6B is a fragmentary rear elevation view of the inner (left) arm of the tool shown in Fig. 1;
Fig. 7 is a view of a section taken at 7-7 in Fig. 2, along the bottom surface of the top flange of the top member;
Fig. 8 is a view of a section taken at 8-8 in Fig. 2, along the axis of symmetry of the top member;
Fig. 9 is a front elevation view of the inner (left) arm of the tool shown in Fig. 1;
Fig. 10 is a section view taken at 10-10 in Fig. I;
Fig. 11 is a view similar to Fig. 10, with the claws of the tool slightly open;
Fig. 12 is a front elevation view of the outer (right) arm of the tool shown in Fig. 1;
Fig. 13 is a view similar to Fig. 12, with the claws of the tool slightly open;
Fig. 14 is a perspective view of the latch of the inner arm of the tool shown in Figs. 1, 2, and 3;
Fig. 15 is a perspective view of the ramp-like member of the inner arm shown in Figs. 1, 2, 3, 7, and 8;
Fig. 16 is a perspective view of the bottom claw of the inner arm shown in Figs. 1, 2, 3, and 8;
Fig. 17 is a plan view of a tray according to the invention with the right hand side shown loaded with an oriented tire chain connected to a tool;
Fig. 18 is a section of Fig. 17 taken at 18-18;
Fig. 19 is a front elevation view of the tray shown in Fig. 17, without a tire chain and tool;
Fig. 20 is a section of Fig. 17 taken at 20-20;
Fig. 21 is a section of Fig. 18 taken at 21-21;
Fig. 22 is an enlarged, fragmentary view of the portion of Fig. 17 showing the switch;
Fig. 23 is a section of Fig. 22 taken at 23-23;
Fig. 24 is a section of Fig. 22 taken at 24-24;
Fig. 25 is a section of Fig. 22 taken at 25-25;
Fig. 26 is an enlarged, fragmentary section of Fig. 22 taken at 26-26 with the leading edge of a tire moving to the right just having passed over the switch, which is in an open position;
Fig. 27 is a view similar to Fig. 26 with the trailing edge of the tire almost having passed over the switch, which is in a closed position;
Fig. 28 is a view similar to Figs. 26 and 27 with the trailing edge of the tire just having passed over the switch, which is in an open position;
Fig. 29 is a fragmentary view of Fig. 26 showing an alternative embodiment wherein there is disposed on the top surface of the switch an adapter whose elevated portion is toward the front of the tray;
Fig. 30 is a view similar to Fig. 29 with the elevated portion of the adapter toward the rear of the tray;
Fig. 31 is an side elevational section view, taken vertically through the axle, of the inside of a wheel resting on a tray with the tool connected to a partially installed chain;
Fig. 32 is a fragmentary view of the tool consisting of a section of the inner arm taken at 8-8 in Fig. 2 and a plan view of the end of the outer arm, with the arms connected to chain links;
Fig. 33 is a fragmentary view of the tool consisting of a section of the inner arm taken at 8-8 in Fig. 2 and a plan view of the end of the outer arm, with the arms connected to chain hooks;
Fig. 34 is an enlarged, fragmentary view of another embodiment of the switch shown in Fig. 17;
Fig. 35 is a section of Fig. 34 taken at 35-35;
Fig. 36 is a section of Fig. 34 taken at 36-36;
Fig. 37 is a section of Fig. 34 taken at 37-37;
Fig. 38 is an enlarged, fragmentary section of Fig. 34 taken at 38-38; and
Fig. 39 is an enlarged, fragmentary section of Fig. 34 taken at 39-39.

The drawings show the tool and the tray approximately to scale. The actual distance between the inner and outer arms of the tool as shown is 8.25 in. (209.55 mm.). The actual length of the tray as shown is 33.0 in. (838.2 mm.).

### Definitions

The following terms will be used throughout this application in accordance with these definitions, unless a different interpretation is required by the context.

The term "tire" refers to an inflated tire mounted on a rim which is a component of a wheel on a vehicle. The tire has a tread which joins 2 sidewalls -- an "inner" sidewall toward the shaft driving the wheel and an opposite, "outer" sidewall. The terms "inner" and "outer" will be used in a similar manner to refer to an arm of the tool intended to be used adjacent a sidewall. The "width" of the tread is the distance between its edges, in the direction parallel to the axis of rotation of the wheel. The "maximum width" or "section width" of the tire is its maximum width in a direction parallel to the wheel's axis of rotation and is conventionally the nominal width of the tire. The "radius" of the tire is the distance from the axis of rotation to the ground. The "footprint" of the tire is the portion of its tread which is in contact with the ground. The "bottom dead center" or "BDC" of the tire is the line where its bottom surface intersects a vertical plane including the axis of rotation; the BDC will be approximately at the center of the footprint when the tire is resting on a flat surface.

The term "tire chain" refers to what is installed or is intended to be installed on a single tire. "Tire chain" and "snow chain" are synonyms. A tire chain includes side chains and cross chains joined together. The term "chain" alone will be used to refer to any two or more elements of a tire chain. The term "element" refers to any element of a side chain or a cross chain, such as a link, a "cross chain hook" connecting a cross chain with a side chain, or a fastening hook at an end of a side chain. The term "locking hook" will refer to a fastening hook having a camming or locking mechanism. The term "open hook" will refer to a rigid fastening hook of the type normally used adjacent the inner sidewall of the tire. A fastening hook and the link at the opposite end of the side chain to which it is or is intended to be connected will be said to be "mating". The term "fastening element" will refer to a hook or a mating link. The term "free", as used with reference to a chain element, means that the element is not connected to the tool, and thus may refer to an element held by the user or restrained by a holder on the tray. The term "side chain circle" will refer to a circle drawn through the angles of a polygon formed by a side chain installed on a tire.

A "connection angle" is the angular position on the tire where, after the tire chain has been properly draped and tensioned, the fastening elements on opposite ends of a side chain are connected; the connection angle is measured from the BDC about the axis of rotation of the wheel. The term "interference" will refer to contact of the tool or the hands of the user with a nearby portion of the vehicle (e.g., fenders, mudguards, frame, brakes, steering mechanism, or shock absorbers). The term "clearance" will refer to distance between the tire and such a portion of the vehicle which limits positioning or operation of the tool or the hands of the user.

The terms "front" and "rear" will be used consistently to refer to the installation tray as though it were a garage facing a street. That is, the tire is intended to enter the front of the tray and stop before it reaches the rear. Similarly, the terms "front" and "rear" will to refer to the installation tool in its orientation when lying in the installation tray, but when the tool is in a different orientation will not correlate to those terms as applied to the tray. As used with respect to the tray and tool, "front" and "rear" will not necessarily correlate to the direction the vehicle is driven or its orientation. To avoid confusion, the terms "in low gear" will refer to driving the vehicle with the transmission in drive, low gear, or another forward gear, and "in reverse" will refer to driving the vehicle with the transmission in reverse.

The term "mirror image" refers to symmetry about a longitudinal, vertical plane.

### Tool

Installation tool **10** consists of inner arm **12** and outer arm **14** extending from opposite ends of transverse handle or body member **16**.

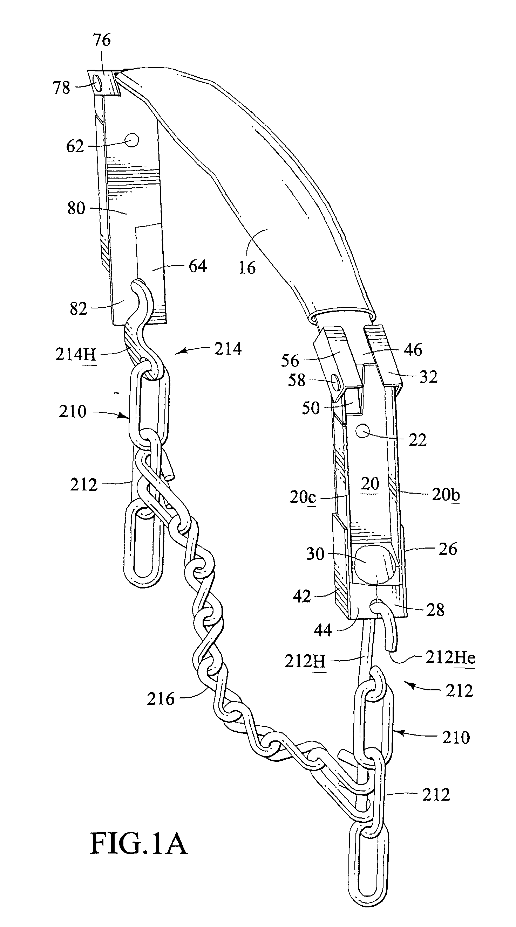

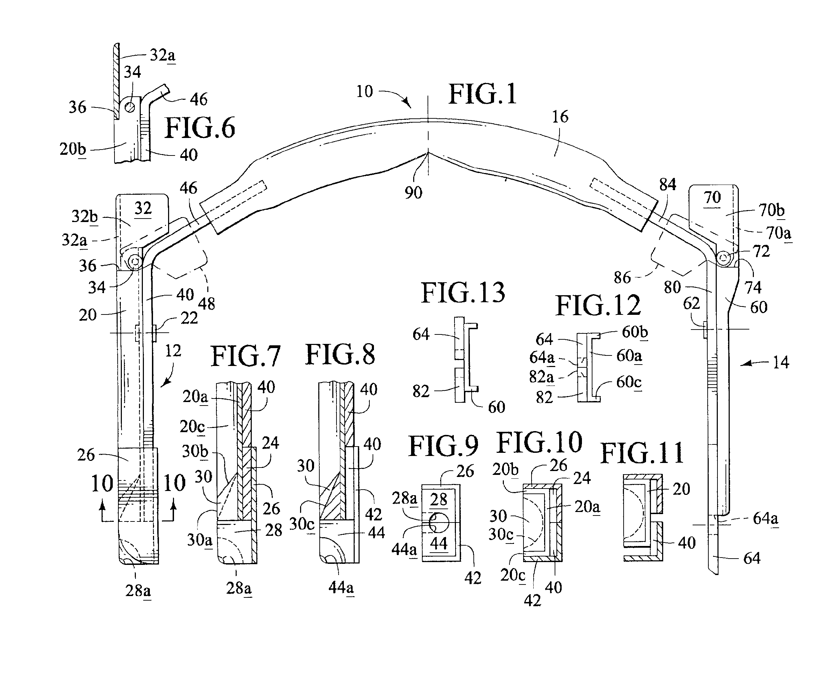

As shown in Figs. 1 and 3, inner arm **12** consists of top member **20** and bottom member **40** pivotally connected by rivet **22.** Similarly, as shown in Figs. 1 and 5, outer arm **14** consists of top member **60** and bottom member **80** pivotally connected by rivet **62**.

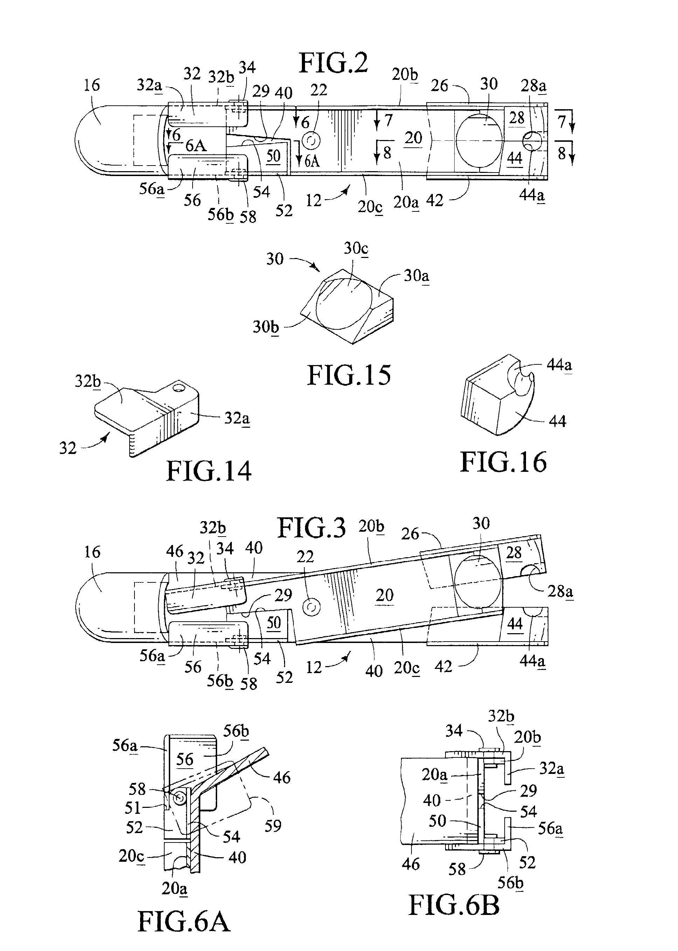

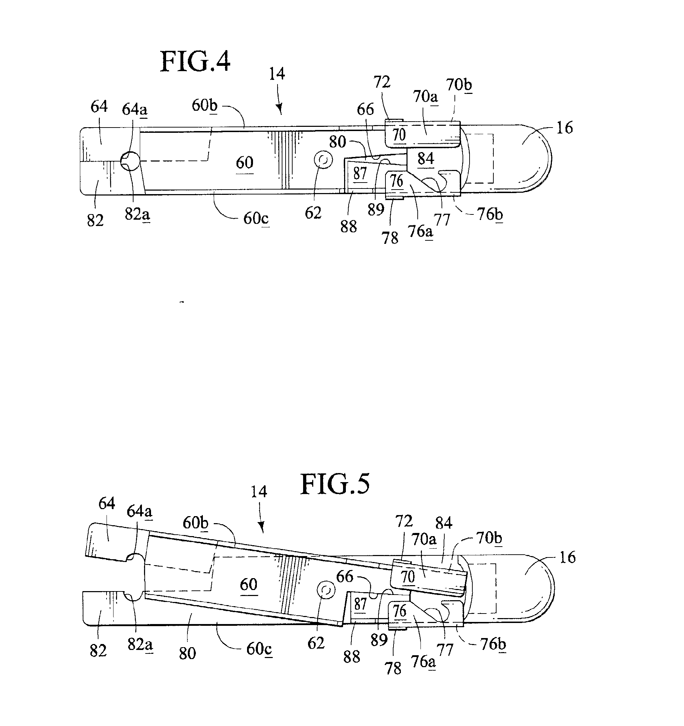

Top member **20** of inner arm **12** is channel-shaped, with web **20a** joining top flange **20b** and bottom flange **20c**; see Figs. 7 and 10. Spacer **24**, claw holder **26**, and claw **28** are fixed to the front of top member **20** by fasteners or adhesive (not shown); see Figs. 7 and 9. Claw **28** has in its flat, horizontal, lower surface a groove **28a** which curves in a quarter-circular arc and has a semicircular cross section; see Figs. 2, 3, 7, and 9. At the rear of claw **28** is ramp-like member **30** fixed in the channel of top member **20;** see Figs. 2, 3, 7, 8, and 15. Ramp-like member **30** has flat surface **30a** parallel to web **20a** and flat surface **30b** inclined so that it extends from the level of web **20a** to the level of claw **28**. A cylindrical cavity in surfaces **30a** and **30b** creates a concave surface **30c** extending from web **20a** to claw **28**. At the rear end of top member **20** is downwardly facing stop surface **29**; see Figs. 2 and 3. Above stop surface **29** is latch **32,** which comprises side leg or panel **32a** and top leg or panel **32b;** see Figs. 1, 2, 3, 6, and 14. Latch **32** is pivotally connected to top flange **20b** by rivet **34**. By contacting latch side panel **32a**, rearwardly facing stop surface **36** and the adjacent straight side edge of top flange **20b** limit rotation of latch **32** in the direction away from the handle (counterclockwise as shown in Figs. 1 and 6). This is the open or unlatched position of latch **32**, since it allows top member **20** and bottom member **40** to pivot about rivet **22** as shown in Fig. 3.

Bottom member **40** of inner arm **12** has claw holder **42** and claw **44** fixed to its front end; see Figs. 2, 3, 8, and 9. Like claw **28**, claw **44** has in its flat, horizontal upper surface groove **44a** which curves in a quarter-circular arc and has a semicircular cross section; see Figs. 2, 3, 8, 9, and 16. At its rear end, bottom member **40** merges at a 120° angle into angular member **46** which is part of the handle. Abutment **50** is secured by fasteners or adhesive (not shown) to the rear of bottom member **40**; see Figs. 2, 3, 6A, and 6B. Abutment **50** has rearwardly facing stop surface **51,** flange **52,** and upwardly facing stop surface **54.** Grip **56** having side leg or panel **56a** and bottom leg or panel **56b** is pivotally connected to flange **52** by rivet **58**, which is below and on the same axis as rivet **34**. By contacting grip side panel **56a**, rearwardly facing stop surface **51** and the adjacent straight side edge of abutment flange **52** limit rotation of grip **56** in the direction away from the handle (counterclockwise in Fig. 6A). In this position latch side panel **56a** forms an angle of 180° with bottom member **40**.

Rotation of latch **32** in the direction toward the handle (clockwise in Figs. 1 and 6) is limited by angular member **46**, which is contacted by the inside surface of latch side panel **32a**. Phantom lines **48** in Fig. 1 show this 120° position for latch **32.** This is the latched position of latch **32**, since its top panel **32b** is blocked by angular member **46** and thus top member **20** and bottom member **40** cannot pivot about rivet **22**. Friction at rivet **34** keeps latch **32** in the latched position until the user rotates it to the unlatched position. If additional resistance to unintended rotation is desired, the friction between latch top panel **32b** and angular member **46** may be increased by providing a thin rubber sleeve (not shown) stretched around the portion of angular member **46** beneath latch **32.** Alternatively, a pinhead-size, downwardly embossed button detent (not shown) can be provided in top panel **32b** to engage angular member **46** in the 120° position. The operation of grip **56** is similar to that of latch **32**. Rotation of grip **56** in the direction toward the handle (clockwise in Fig 6A) is limited by angular member **46**, which is contacted by the inside surface of grip side panel **56a**. Grip **56** does not perform a latching function.

When latch **32** is in the unlatched position, a squeezing force applied to latch top panel **32b** and grip bottom panel **56b** causes top member **20** and bottom member **40** to pivot about rivet **22** like pliers, and separates claws **28**, **44**; see Fig. 3. Grip **56** provides an improved bottom surface and increased leverage for applying the squeezing force to cause top member **20** and bottom member **40** to pivot about rivet **22**. Although it is not necessary to rotate grip **56** to the 180° position, the user will find it intuitive and easy to simply rotate both latch **32** and grip **56** to the 180° position, and then squeeze their similar, parallel, superimposed surfaces together. The pivotal movement of top member **20** with respect to bottom member **40** stops when stop surface **29** contacts stop surface **54**; see Fig. 3, which shows inner arm **12** in the fully open, releasing configuration.

When claws **28**, **44** are together, their grooves **28a**, **44a** are aligned to form a quarter-circular passage having a circular cross section; see Figs. 2, 7, 8, and 9. Claws **28**, **44** will positively and securely engage and hold an element of an inner side chain, and they will continue to confine the element as long as latch **32** is in the latched position, in such a manner that arm **12** of the tool will remain in this closed, confining configuration and connected to the element during storage, handling, and installation of the tire chain, irrespective of the relative positions of the element and the arm and irrespective of the directions of forces pulling on them. Claws **28**, **44** may clasp the element loosely, and are not intended to grip the element by applying a continuous squeezing force.

Top member **60** of outer arm **14** is channel-shaped, with web **60a** joining top flange **60b** and bottom flange **60c**; see Figs. 1, 4, 5, and 12. Claw 64, which has semicircular opening **64a**, is fixed to the front of top member **60** by fasteners or adhesive (not shown); see Figs. 1, 4, 5, 12, and 13. At the rear end of top member **60** are downwardly facing stop surface **66**, latch **70** (including side panel **70a** and top panel **70b**), stop surface **74**, and rivet **72**.

Bottom member **80** of outer arm **14** terminates at its front end in claw **82** which has semicircular opening **82a,** and at its rear end merges into angular member **84;** see Figs. 1 and 2. Also at the rear end of bottom member **80** are abutment **87** (including flange **88** and stop surface **89**), hanger grip **76** (including side panel **76a** and bottom panel **76b**), and rivet **78**; see Figs. 4 and 5. Side panel **76a** forms hook **77**.

When claws **64**, **82** are together, semicircular openings **64a** and **82a** are aligned to form a circular passage; see Fig. 4. Claws **64, 82** will positively and securely engage and hold an element of an outer side chain, and they will continue to confine the element as long as latch **70** is in the latched position, in such a manner that arm **14** will remain in this closed, confining configuration and connected to the element during storage, handling, and installation of the tire chain, irrespective of the relative positions of the element and the arm and irrespective of the directions of forces pulling on them. Claws **64, 82** may clasp the element loosely, and are not intended to grip the element by applying a continuous squeezing force.

Except for claws **64, 82**, the depths of flanges **60b, 60c**, and hook **77**, the structure of outer arm **14** and the movement of its components are essentially mirror images of those of inner arm **12.** The latched position of latch **70** is shown in Fig. 1 by phantom lines **86.** Fig. 5 shows outer arm **14** of this embodiment in the fully open, releasing configuration, in which stop surfaces **66** and **89** are in contact with each other.

Handle **16** is articulated, in that hinge **90** allows claws **28**, **44** of inner arm **12** and claws **64**, **82** of outer arm **14** to be brought together. Handle **16** is preferably made from a nonmetallic material, so that it will not rapidly conduct heat away from the user's hand. A resilient material such as a section of rubber hose is suitable. The hinge may be created by folding the hose and compressing the fold in a vise, and the ends of the hose may be telescoped over a reduced height portion of angular members **46** and **84** and fastened with rivets (not shown). This permits easy rotation of handle **16** at hinge **90** in the plane of tool **10**, and, with considerably more force, limited rotation out of that plane.

The tool shown in Figs 1-16 is desirably one of a pair used together so that tire chains can be installed on two drive wheels without moving the vehicle more than once. The tools may be used either upside down or right side up (as will be described later), but they have been described in the orientation in which the latch is on top. This orientation is preferred when the end elements of the side chains are being connected on the tire, because the latches are more visible and accessible. Thus, assuming that the latches will be up (i.e., exposed to the user) when the connections are made, the tool shown in Figs 1-16 is intended for use on the driver side (left) wheel if the tray will be placed ahead of the wheel and the vehicle driven in low gear onto it, or on the passenger side wheel if the tray is being placed behind the wheel and the vehicle driven in reverse onto it. For the other two situations (driver side/in reverse and passenger side/in low gear) the tool will be the mirror image of the tool shown in Figs 1-16. The terms "top" and "bottom", as applied to members **20, 40, 60, 80**, for example, are merely to identify these parts for convenience in describing them. The length and spacing of arms **12, 14** will vary with the radius and width of the tire, as will be described later.

While symmetry between the inner and outer arms simplifies description and manufacture, it is not essential. These considerations may be overridden in some applications by differences in the requirements to be met by the inner and outer arms, for example, the requirements peculiar to the inner arm that it operate in an enclosed space and that its connection to the tire chain will probably not be visible to the user.

In an alternative embodiment of the installation tool, the bottom half of top member **60** of outer arm **14** is eliminated while preserving the hole for rivet **62** by curving the new lower edge in a circular arc around it, and abutment **87** is extended forward to occupy the space thereby created. The top and bottom members then separate cleanly along a horizontal axial plane (with the exception of the portions held by the rivet), instead of overlapping like a pair of scissors, and each member has a flange and half of a ramp-like member as well as a claw. Inner arm **12** is similarly constructed, with the claws being attached directly to members similar to outer claws **64, 82**.

It will be understood that the clasp mechanisms need not be as specifically described, and need not utilize pivotal motion. A component of the clasp may be arranged to move relative to another component of the clasp in a different relationship, such as parallel to the arm or up, down, or sideways with respect to the arm. For example, an arm may include a tube or casing of rectangular cross-section with a threaded shaft extending longitudinally inside it. At one end the casing forms a seat for an exterior surface of the fastening element, and a hook slides longitudinally within the casing. The outer end of the hook performs the function of claws 28, 44 by engaging an interior surface of the fastening element and pulling it into the seat, while the inner end of the hook is threaded on the shaft. By rotating a visible knob attached to the shaft outside the other end of the casing, the fastening element may be either pulled into the seat to confine and lock it or ejected from the casing to release it. A sliding or pivoting latch extending between the knob and the casing may be employed for locking the clasp for quick release. Other examples include a pin-and-yoke, or a cupboard-type latching mechanism. In all variations it is desirable that the latch or other locking device be visible, readily accessible, and easily operated by the user. It is also desirable that the arm holding the fastening element be relatively thin in the horizontal direction (no wider than the widest part of the tire chain) and free of abrupt changes in the profile of its surface, in order to minimize the potential for interference.

### Tray

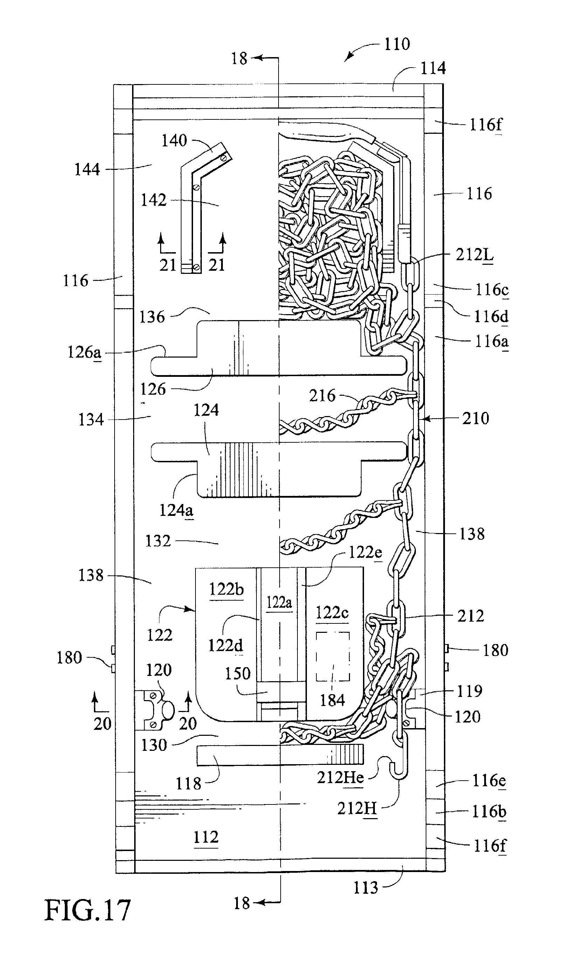

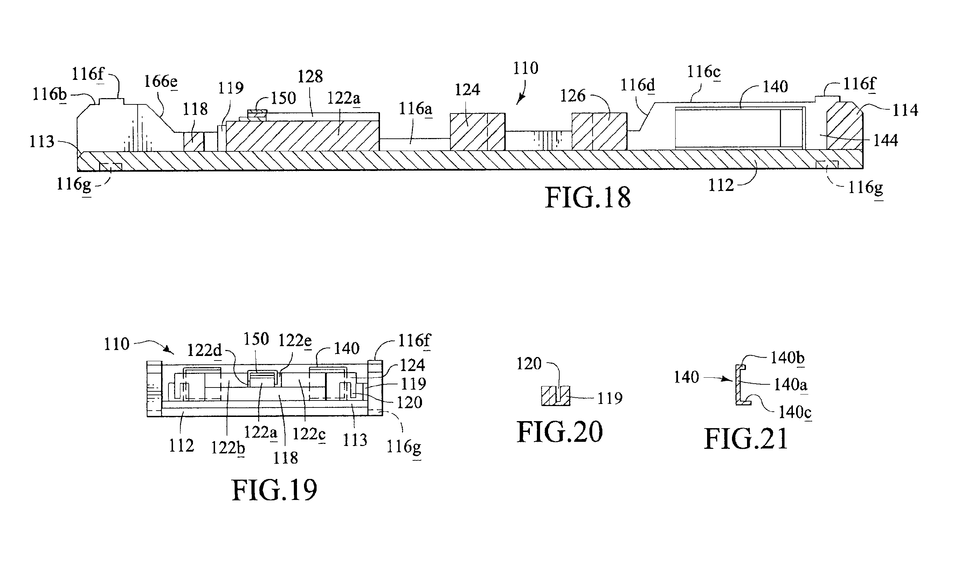

Turning now to tray **110** shown in Figs. 17-21, and disregarding for the moment the tire chain and tool shown in the right hand side of Fig. 17, base or floor **112** with front, entrance lip **113** has, upwardly extending therefrom, rear wall **114** and side walls **116** joined thereto. Side walls **116** each have a low portion **116a**, a high portion **116b** toward the front, another high portion **116c** toward the rear, step **116d** between portions **116c** and **116a,** and step **116e** between portions **116a** and **116b.** Each side wall **116** also has stacking lugs **116f** on its top surface and stacking recesses **116g** in its bottom surface. The bottom surfaces of base **112** and side walls **116** should have teeth or lugs (not shown) which should be large enough to prevent slipping if the tray is used on ice or snow, yet small enough to support the tray without breaking if the tray is used on pavement.

At the front end of base **112** is front wall or step **118**. Two chain element holders **119**, each with a slot **120**, are mounted at opposite sides of tray **110** on either base **112** or side wall **116** so that if necessary they may be readily detached, moved forward or rearward, and reattached in the optimum position to accommodate the cross chain length of the particular tire chain being installed. Between front wall **118** and rear wall **114** are front vehicle support **122**, center vehicle support **124**, and rear vehicle support **126**. Front vehicle support **122** has center portion **122a**, left portion **122b**, and right portion **122c**, which are separated respectively by groove **122d** and channel **122e** and define signal-initiating device recess **128**. Rear vehicle support **126** is relatively close to walls **116** at its maximum width, which is toward the front of the tray, and has rearward-facing concave surfaces **126a**. Similarly, center vehicle support **124** is relatively close to walls **116** at its maximum width, which is toward the rear of the tray, and has forward-facing concave surfaces **124a.**

The front and rear walls **118**, **114** and the supports **122, 124, 126** define front transverse channel **130,** second transverse channel **132,** third transverse channel **134,** and rear transverse channel **136**. Rear channel **136** is approximately aligned with step **116d** in side wall **116**. Longitudinal channels **138** extend between supports **122**, **124**, **126** and side walls **116**. To the rear of rear support **126** are two interior walls **140**. Each interior wall **140** has web **140a** between inwardly facing flanges **140b** and **140c**. Chain well **142** is the generally bell-shaped area defined by interior walls **140**, rear support **126** (including concave surfaces **126a**), and side walls **116**, and includes rear transverse channel **136**. To the rear and sides of interior walls **140** is U-shaped tool compartment **144**, which straddles chain well **142**, with a portion of chain well **142** being situated between the legs of the "U". Interior walls **140** are mounted on base **112** so that if necessary they may be readily detached, moved laterally, and reattached in the optimum position to correspond to the width of the particular U-shaped tool **10** being used.

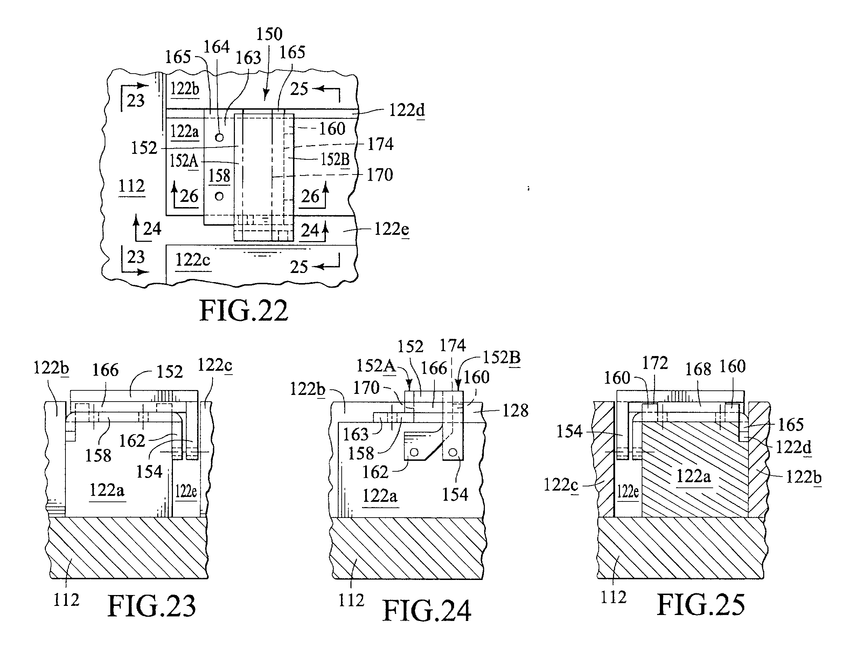

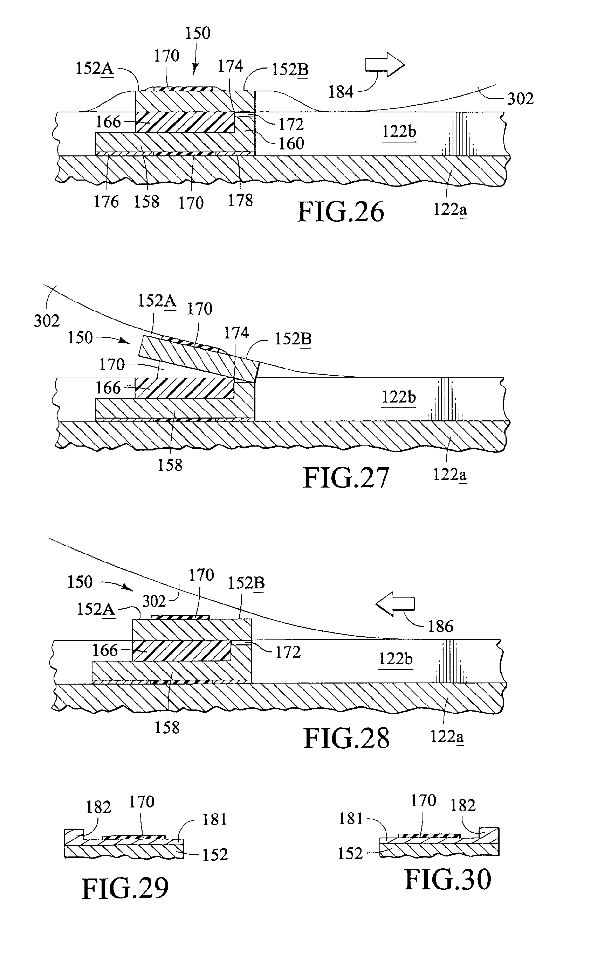

As shown in Figs. 22-28 as well as in Figs. 17-21, switch **150**, which is supported in signal-initiating device recess **128** by front support center portion **122a**, comprises top, rocking element **152** and stationary, bottom element **158**. Top element **152** has front bearing surface **152A,** rear bearing surface **152B,** and terminal **154.** Stationary bottom element **158** has contact posts **160**, terminal **162**, fastening flange **163** with holes **164**, and guide legs **165**. The two elements are made of metal or other electrically conducting material. Top element **152** is spaced from bottom element **158** by rigid platform **166** and resilient pad **168**, both of which are non-conducting. The components of switch **150** are held together by adhesive and a resilient compression band **170** (depicted by phantom lines) surrounding top element **152** and bottom element **158** and passing between guide legs **165.** Top element **152** is not secured to platform **166**, but is urged against it by band **170** when switch **150** is in a condition of repose. There is a small gap **172** between each post **160** and the bottom of top element **152**. In the absence of a countervailing downward force on front bearing surface **152A**, a downward force on rear bearing surface **152B** causes top element **152** to rock about fulcrum **174** at the rear of rigid platform **166**, against the forces applied by compressed pad **168** and tensioned band **170,** until gap **172** is closed and posts **160** contact top element **152**, as shown in Fig. 27.

Switch **150** rests on the bottom portion of resilient compression band **170** and on shims **176**, **178**, and is secured to front support center portion **122a** by fasteners (not shown) extending through connecting flange holes **164**. Terminal **162** and guide legs **165** embrace center portion **122a** on its left and right sides, respectively, so that switch **150**, when it is not so secured, may be slid forward and rearward in recess **128**. Switch top element **152** extends out of recess **128** and above the top surface of front support **122**. Thus, switch **150** is situated within, and protected by, front support **122**.

Two insulated electrical wires (not shown) are connected to terminals **154**, **162**, extend into channel **122e**, and then extend through base **112** to two pairs of terminals **180** at the outside of side walls **116**; an audio or d.c. power jack may be substituted for each pair of terminals. Alternatively, the wires may extend from channel **122e** to compartment **184** within front support portion **122c**. As will be described later, compartment **184** may contain a sending device (not shown) for either emitting a signal similar to those used in remote keyless entry systems for automobiles or emitting an audible sound, preferably a continuous sound. The wires within channel **122e** are loose and sufficiently slack that switch **150** may be slid forward or rearward to any position along the axis of recess **128** while the wires remain within channel **122e**.

The profile of the top surface of switch **150** may be varied by adapter **181** with projection **182**. As shown in Figs. 29 and 30, adapter **181** may be retained on top element **152** by resilient compression band **170**, with projection **182** either toward the front of the tray or toward the rear of the tray, respectively.

The function of switch **150** is best understood by recognizing that this function could also be performed, at least in theory, by a combination of two separate conventional switches -- a normally closed momentary switch at **152A** and a normally open momentary switch at **152B --** wired so that a circuit is closed when, and only when, there is a downward force at **152B** but not at **152A**. Switch **150** is preferred over multiple conventional switches because it is simple and durable and thus well suited for its present application, as will become apparent when use of the invention is described later.

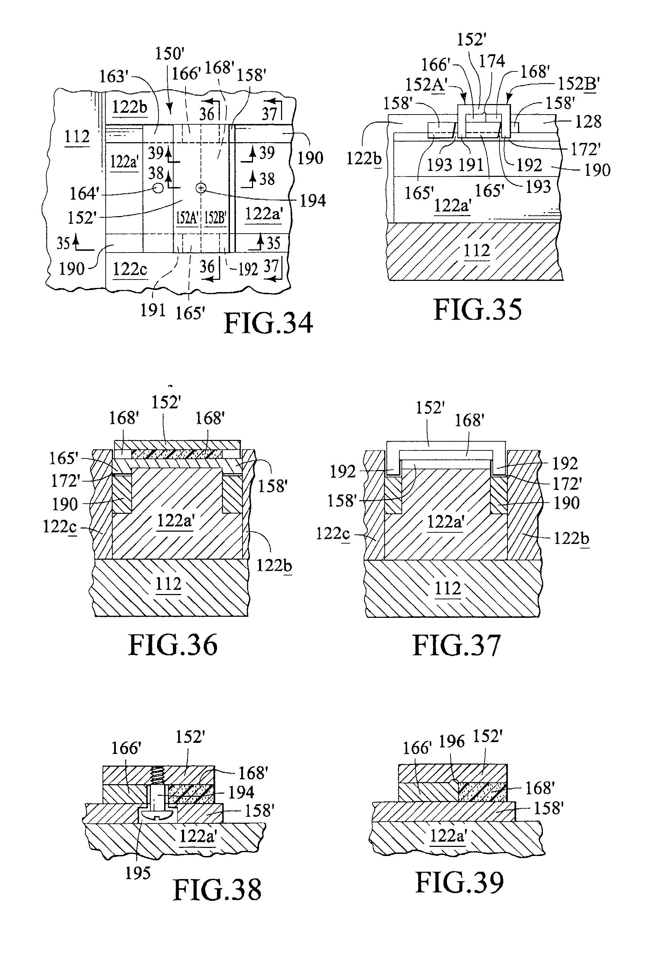

Figs. 34-39 show an embodiment of the switch system in which front support center portion **122a'** abuts front support left and right portions **122b**, **122c** and has horizontal, rectangular contact bars **190** recessed in its top surface. Wires (not shown) extending through base **112** connect contact bars **190** to terminals **180** or jacks, as shown generally in Fig. 17. Switch **150'** comprises top, rocking element **152'** and stationary bottom element **158'**. Top element **152'** has the general shape of a four-legged footstool, with front legs **191** and rear, contact legs **192**. Stationary bottom element **158'** has four passages **193** which receive legs **191**, **192.** Bottom element **158'** includes downwardly extending guide legs **165'** and fastening flange **163'**, which has mounting hole **164'**. Top element **152'** is spaced from bottom element **158'** by, and is adhesively bonded or otherwise secured to, rigid platform **166'** and resilient pad **168'**. Compression springs may be substituted for resilient pad **168'**. As shown in Fig. 38, top element **152'** is held loosely in place by retaining screw **194**, which is threaded into top element **152'** with its head in counterbore **195** in bottom element **158'**. Top element **152'** is made of metal or other electrically conducting material, or at least is electrically conductive between rear legs **192**, while the remainder of switch **150'** may be made of either conducting or nonconducting material. A fastener (not shown) extending through mounting hole **164'** secures switch **150'** to front support center portion **122a'**. Guide legs **165'** embrace center portion **122a'** to permit switch **150'** to be slid forward and rearward along its top surface, within recess **128**, when the fastener is removed from mounting hole **164'**. Switch top element **152'** extends out of recess **128**. Legs **191**, **192** are spaced from contact bars **190** by small gaps **172'**. When a downward force bears on rear bearing surface **152B'** of top element **152'** but not on its front bearing surface **152A'**, top element **152'** rocks about fulcrum **174** against the force applied by compressed pad **168'**, until gaps **172'** between rear legs **192** and contact bars **190** are closed and rear legs **192** come into contact with contact bars **190**. This closes an electrical path between paired terminals **180**. Leg-receiving passages **193** should have shapes and clearances with legs **191**, **192** which permit free rotation of top element **152'** about fulcrum **174** while preventing unnecessary horizontal movement of top element **152'** relative to bottom element **158'**. In addition, or as an alternative, the top rear edge of rigid platform **166'** may have, adjacent to and aligned with fulcrum **174**, tongue **196** disposed in a groove in the bottom surface of top element **152'**, as shown in Fig. 39. In order to reduce the length of switch **150'**, fastening flange **163'** can be eliminated and bottom element **158'** secured to the front support center portion in another manner. (Such a length reduction is advantageous because it allows the front support to be shortened without changing the longitudinal distance over which the switch may be mounted on the center portion.) For example, a countersunk hole for a mounting screw may be provided through rigid platform **166'** and bottom element **158'**, with an access hole through top element **152'**. Alternatively, the portion of the bottom element engaging the front support center portion may be replaced by a separate plate removably connected by screws to the remaining, upper portion of the bottom element, in such a manner that the plate may be reversed 180° with respect to the remaining portion, thereby enabling the mounting hole to be positioned either at the front or the rear of the bottom element, as desired. In order to avoid increasing the height of the fulcrum, such a plate could be disposed entirely within a longitudinal groove in the top surface of the front support center portion.

As another alternative, tongue **196** may be replaced by a spindle, for example a dowel pin, which pivotally connects the top element and the bottom element, by extending through holes in upturned flanges at the side edges of the bottom element and corresponding holes in downturned flanges at the side edges of the top element. This pivotal connection eliminates the need for front legs **191**, retaining screw **194**, and the positioning function of rear legs **192**. To enhance the weather-resistance of the switch, the top element may also have downwardly extending walls at its front and rear edges, generally in the planes of the legs shown in Fig. 35, so that the walls form with the side flanges a rectangular skirt which at least partially surrounds the bottom element.

As another alternative, a third, parallel contact bar may be provided in a center recess in front support center portion **122a'**, a corresponding third rear leg provided at the center of top element **152'**, and the three contact bars wired so that the electrical path will be closed when the top element makes contact with the center contact bar and either of the side contact bars. To ensure good electrical contact, a resilient pad may be disposed in the center recess beneath the center contact bar, thereby elevating the center contact bar slightly higher than the side contact bars when the center rear leg is not bearing on it.

Except for the differences just described, switches **150** and **150'** are very similar in design and function and respond in the same manner to downward forces on the front and rear bearing surfaces of the top, rocking element. Switch **150'** is preferred because it eliminates the need for loose wires, is simpler and sturdier, and does not require wires to be connected to the switch. The description of the invention hereinafter will refer primarily to switch **150**, but it will be understood that the description also applies to switch **150'** unless otherwise stated.

### Loading the Tray

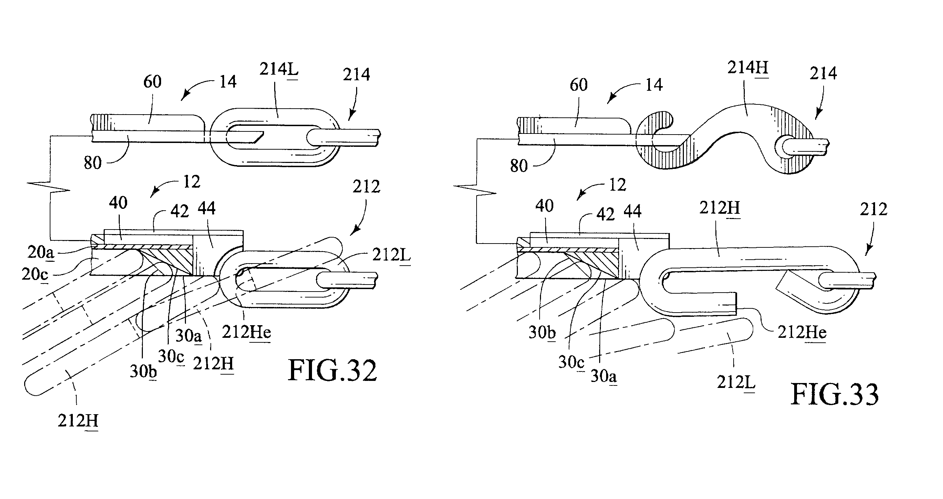

The tire chain is loaded into tray **110** in its proper orientation and connected to tool **10,** as shown in the right hand side of Fig. 17, which depicts ladder-type tire chain **210** having inner side chain **212**, a corresponding outer side chain (not shown in Fig. 17) in left longitudinal channel **138**, twist-link cross chains **216**, fastening hooks comprising inner hook **212H** and outer hook **214H**, and fastening links comprising inner link **212L** and outer link **214L**. (Outer side chain **214**, outer hook **214H** and outer link **214L** are shown in the upper portions of Figs. 32 and 33.) Preferably this loading is done ahead of time, at a time and place and under conditions chosen by the user for his or her convenience, comfort, and safety.

To load the tray, the tire chain is preferably laid out on a flat surface with the hooks which connect the cross chains to the side chains facing down. Since twisted chain is a frequent cause of tire chain failure, twists should be removed until each side chain is in a relaxed state. If a side chain is not relaxed at a cross chain hook, it can be untwisted by threading the end of the side chain behind the cross chain. This is repeated until the tire chain is completely relaxed.

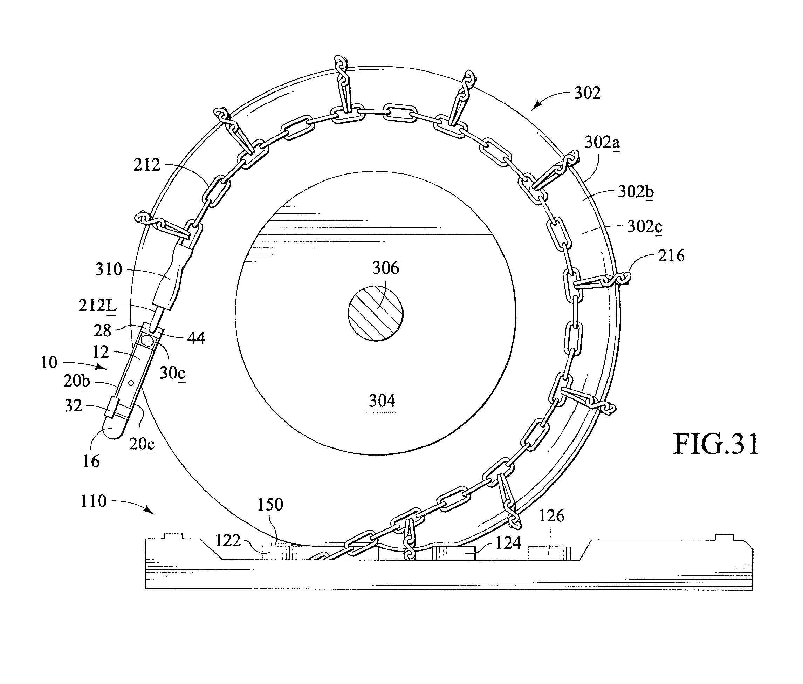

Next, tool **10** is connected to the fastening elements of the side chains at one end of the tire chain. With the tool oriented so that latches **32, 70** are facing down, inner arm **12** will be connected to the side chain which has the open hook, and outer arm **14** will be connected to the side chain which has the locking hook. The connection will be made to the appropriate end of the tire chain -- either the end with the hooks or the other end, where the fastening elements are links. If the tool is being connected to the link end, it will be connected to the link which will be eventually connected to the hook when the tire chain is installed, which may not be the endmost link. I recommend pulling each chosen fastening link through a short resilient sleeve, such as narrow bicycle inner tube **310** as shown in Fig. 31, so that the sleeve (not shown in Fig. 17) covers the side chain from the last cross chain to about one-fourth of the chosen link. (This isolates the chosen link from the rest of the links, provides some rigidity to the endmost links, makes the endmost links easier to handle, and reduces hand-to-metal contact. Also, if the chosen link is not the endmost link, it also avoids the disadvantages of cutting the excess side chain link(s) or merely wiring or tying them to the side chain. Sleeve **310** can be made more rigid, as for example by making it from, or using it inside of another sleeve made of, a material having a greater wall thickness, such as rubber hose or plastic tubing, thereby making the end of the side chain easier to handle, which is an advantage not only in the fastening of the chain elements but also in the unfastening of them when the tire chains are removed. Also, a similar sleeve or sleeves may be used as well on the end of the side chain with the mating fastening hook, and the sleeve(s) may be extended past the side chain(s) to provide rigidity over a greater length of side chain, as for example by lengthwise slitting and circumferential taping of the sleeve.)

To connect inner arm **12,** claws **28, 44** are separated to the open position, the inner fastening element (link or open hook) is placed in groove **44a,** the claws are closed together by squeezing top claw holder **26** and bottom claw holder **42,** and latch **32** is moved to the latched position; see the lower portions of Fig. 32 or 33, disregarding the phantom lines for the moment.

At this point the relationship between the fastening element and claws **28, 44** should be noted, since it provides advantages when the tire chain is stored, handled, and installed. A small portion of the fastening element (a quarter-circular arc at one end) is securely but releasably confined within the passage formed by grooves **28a, 44a;** the remainder of the fastening element is exposed. The claws occupy very little of the interior space within the fastening element (approximately 2 percent). The fastening element cannot rotate about its longitudinal axis, and cannot move longitudinally or transversely with respect to tool arm **20.** Although it can rotate about a vertical axis, this is not a problem when the connection of the fastening element of the side chain is being made, since pulling the chain with the tool fixes its rotational orientation to the optimum position. It can be a consideration before that, however, when (1) the fastening element is an open hook such as hook **212H** shown in Fig. 33, and (2) there is little or no tension on the chain, as is the case during storage, handling, and installation prior to connection, because the hook should not be permitted to rotate out of the claws (i.e., by hook rotation which is clockwise as shown in Fig. 33).

The particular metal thickness of open hook **212H** and the passage size illustrated in Fig. 33 (both are approximately 0.250 in. (6.35 mm.) diameter) and the length of the straight portion at hook end **212He** (approximately 0.750 in. (19.05 mm.)) prevent such rotation, but it is desirable for the tool to be able to accommodate open hooks of different sizes and configurations. Typically open hook thicknesses range from about 0.250 in. (6.35 mm.) for standard tire chains and about 0.165 in. (4.191 mm.) for low clearance, Class "S" tire chains. Claws **28, 44** shown in the lower portions of Figs. 32 and 33 have been found satisfactory for these typical open hooks, but it may be necessary to make modifications to enable them to accommodate greater thickness ranges and/or different configurations of other open hooks. One such modification would be to extend the claws, and the passage they define, in a straight line slightly away from, and parallel to the longitudinal axis of, the tool (to the right as shown in Fig. 33), so that the extended nib of the claws inside the hook restrains the hook from rotation. A second such modification would be to add to each claw a small pin or screw that obstructs a portion of the passage when the tool is being used with a hook whose metal diameter is substantially less than the diameter of the passage, for example two opposed, conically tipped set screws lying on a vertical axis at the edge of the passage nearest the center of each claw (i.e., at the midpoint of the longer quarter-circular broken line at the lower left corner of Fig. 1). A third such modification would be to change the hook itself by extending the straight portion at the end of the hook so that it cannot pass through the passage.

To complete the connection sequence, outer arm **14** is connected to the outer fastening element (link or locking hook) in a manner similar to inner arm **12**, as shown in the upper portion of Fig. 32 or 33, and latch **70** is latched. Hanger **76** is pivoted against handle **16** so that it is directly beneath latch **70**.

Claws **64, 82** shown in the upper portions of Figs. 32 and 33 have been found satisfactory for typical locking hooks, such as locking hook **214H,** but as with claws **28, 44** it may be necessary to make modifications to enable them to accommodate hooks of different sizes and configurations. Possible modifications include increasing the height and/or length of the claws, and to either change the configuration of the circular passage or add additional openings near the circular passage to create one or more additional passages of different configuration.

Now that tool **10** is connected to the tire chain, a minor portion (approximately one-third) of the tire chain at the end remote from the handle is picked up and moved laterally onto tray **110**, with the hooks of the cross chains still facing down and with the cross chain farthest from tool **10** fitting into front transverse channel **130**. The remaining, major portion (approximately two-thirds) of the tire chain is raised by tool **10** to a vertical position and then lowered and laid down in a Z-folded fashion to fill chain well **142**, with the cross chains remaining more or less perpendicular to the longitudinal axis of tray **110** and close together, and the side chains piling up to fill in the cavities. Tool **10** is placed in tool compartment **144.** If necessary the chain in chain well **142** is then spread so that it is not piled above rear wall **114** and side walls **116.** At the front end of tray **110,** the links next to the fastening element at the other end of the tire chain are placed in slots **120**, which fixes that end of the tire chain with the fastening elements exposed. The tire chain is now laid out in the tray as shown in the right side of Fig. 17, with the walls of the tray and the supports confining the tool and the various elements of the tire chain so that they remain oriented and cannot become commingled. Tool inner arm **12** is connected to inner fastening link **212L** and, as shown in Figs. 32 and 33, tool outer arm **14** is connected to outer fastening link **214L**. Inner fastening hook **212H** (shown in Figs. 32 and 33) and outer fastening hook **214H** are held just forward of slots **120**.

Of course, while loading the tray has been described with the tire chain being arranged in the tray after being connected to the tool, this sequence may be reversed.

Next, the foregoing is repeated, with the other tire chain being connected to the other tool 10 of the pair and placed in a second tray **110**. It should be noted that if the two tire chains are identical, the tool will be connected to the fastening hooks of the second tire chain, and the fastening links of the second tire chain will be just in front of slots **120** (not shown). On the other hand, if the second tire chain is a mirror image of the first (i.e., the first tire chain and the second tire chain are identical, except that the open hook and the locking hook are reversed), the tool will be connected to the same kind of fastening elements (either links or hooks) on both tire chains. In this case it probably will be preferable to connect the tool to the hooks (as shown in Fig. 33) rather than the links (as shown in Fig. 32), because connecting the ends of the side chain during installation, which will be described later, becomes slightly easier. In either case the connection of the fastening hooks to tool **10** keeps the hooks from snagging on another portion of the tire chain during storage, handling, and installation.

If the two trays are being used as a pair, with tires being driven onto both trays simultaneously, a switch **150** is required for only one tray, which should be the tray on the driver's side of the vehicle.

### Storing the Loaded Tray

The loaded trays are stored by stacking one on the other, with stacking lugs **116f** of the lower tray fitting into stacking recesses **116g** of the upper tray. They can be stored indoors or in the vehicle ready for use, preferably with other loaded trays, so that even if a set of tire chains which have been installed are removed because of bare pavement, a fresh set of tire chains can be installed as necessary without having to re-load the removed set of tire chains back into their trays.

### Installing the Tire Chains

To install the tire chains, front lip **113** of the front end of each of the loaded trays is butted against a drive wheel tire with the longitudinal axis of each tray in the center of the path of the tire. The trays may be placed ahead of the tire and the vehicle driven in low gear onto them, in which case the connections between the ends of the side chain will occur behind the tire (i.e., toward the vehicle's backup lights). Alternatively, the trays may be placed behind the tire and the vehicle driven in reverse onto them, in which case those connections will occur ahead of the tire (i.e., toward the vehicle's headlights). The user will determine which, based on the design of the particular vehicle and possibly other circumstances, as will be described later in the discussion of setup.

The vehicle is driven slowly in a straight line onto the tray so that the tire climbs over front wall **118** and onto front support **122.** The tire then passes onto switch **150,** which has been secured to support **122** as previously described in the description of the tray, in a specific forward-and-rearward position predetermined in a manner which will be described later in the discussion of setup. As shown in Fig. 26, the tire **302** is exerting a downward force on both front bearing surface **152A** and rear bearing surface **152B** of top element **152,** so that switch **150,** which is within the footprint of the tire, remains open. The tire continues over switch **150** in the direction indicated by arrow **184** until the trailing edge of the tire lifts off bearing surface **152A,** while still exerting a downward force on bearing surface **152B.** This causes top element **152** to rock about fulcrum **174,** so that the switch closes, as shown in Fig. 27. The contact surface of top element **152** which was adjacent gap **172** is driven by the weight of the vehicle downward against the contact surfaces of posts **160** of bottom element **158,** which tends to breach any oxide layer on the contact surfaces and otherwise creates a firm electrical contact. The closing of the switch initiates a visual or audible signal to the driver, signalling the driver to apply the brakes and stop the vehicle. If, after the vehicle is stopped, the signal continues, the driver knows that the tire is in the correct position. (The nature of the signal will be discussed in detail later.) If, on the other hand, the driver does not stop the vehicle in time, and allows the movement of the vehicle to continue until the trailing edge of the tire no longer contact bearing surface **152B,** resilient pad **168** and resilient compression band **170** cause the switch to resume the open position as shown in Fig. 28, and the signal ceases. In that event the driver will drive the vehicle in the opposite direction (i.e., in the direction of arrow **186**), whereby the switch will close again as shown in Fig. 27 as the vehicle is driven, and stop the vehicle when the signal begins again. If the driver overshoots again, he will move the vehicle in the opposite direction and continue the process -- forward, reverse, and so on -- until the signal continues after the vehicle is stopped.

Tests have shown, however, that the tire can be positioned quite accurately and quickly with respect to the vehicle supports, with only a limited number of attempts. The continuous feedback of the signal tells the driver not only when the tire is in the correct position, but also informs the driver of the length of the correct zone and therefore of the appropriate balance of throttle pressure, braking reflex, and braking force. Typically a driver, after the experience of one or two successful stops, will stop in the correct position on the next first attempt.

More fundamentally, the ability to sense and signal whether or not the tire is within a small zone on the tray is superior to the ability to merely sense and signal whether or not the tire has passed a point on the tray. The former provides two limits. The latter provides only one, and hence cannot eliminate variables such as vehicle speed, throttle pressure, throttle reaction time, braking reaction time, variations in these from driver to driver, and variations produced by external conditions such as grade, road surface, and the presence of snow or ice.

Adapter **181** may be employed as desired to shorten or lengthen this sensing and signalling zone by changing the effective profile of the top surface of switch **150.** In the position shown in Fig. 29, with the maximum height of the switch surface toward the front of the tray, adapter **181** shortens the zone. (It can be seen from Fig. 28 that if a projection were to extend upward from surface **152A** for a distance greater than the distance to the tire, the tire could not contact surface **152B** and the zone would be in effect reduced to zero.) On the other hand, in the position shown in Fig. 30, with the maximum height of the switch surface toward the rear of the tray, adapter **181** lengthens the zone by causing switch **150** to close sooner. As an alternative to the adapter, the signalling zone may be shortened or lengthened by varying the distance by which the top surface of top element **152** projects above the plane of the top surface of front support left and right portions **122b, 122c,** as for example by shims between center section **122a** and base **112.**

Of course, as an alternative to the switch, the user may simply rely upon instructions or signals from a spotter observing the tire and tray from outside the vehicle, or may use a trial-and-error method in which the user stops and leaves the vehicle to observe.

If the vehicle is driven too far toward the rear of tray **110** or is inadvertently driven in the wrong direction, interior walls **140** and exterior walls **114, 116** will protect tool **10** from damage due to the weight of the vehicle bearing on it. In addition to preventing the tire from contacting tool **10,** interior walls **140** keep chain in well **142** from spilling or being displaced onto the top of tool **10** and then damaging the tool when the tire is driven onto this overlying chain.

Now, with the vehicle stopped, the emergency brake applied, and the engine turned off, the user grasps the handle of the tool and draws it, with the chain to which it is connected trailing it, upward and circumferentially around the tire, so that it slides over the surface of the tire and is guided along it in a circular arc about the axis of rotation of the wheel. In order to prevent the cross chains from snagging on the edges of the tread, as is likely to occur at side lugs on the tread when the tires are snow tires, the user may initially keep the tire chain on the top of the tread. This is accomplished by using the hand which is holding tool **10** to bend handle **16** at hinge **90** so that handle **16** and arms **12, 14** form a diamond shape, with inner arm claws **28, 44** and outer arm claws **64, 82** and the chain connected to them coming together. As that hand draws tool **10** circumferentially around the tire, the cupped other hand is used as a guide to keep the trailing chain on the tread. This is continued until the side chains become taut, which will occur when the claws are slightly past the vertical. Then the user allows the tool to resume its normal "U" shape and brings the side chains down on the sidewalls. If the user elects not to keep the tire chain on the tread in this manner, as he or she probably would elect if the tires have no lugs at the edges of the tread where the tread and the sidewalls intersect, the cross chains will be guided along the tread and sidewalls, and the side chains will be guided along the sidewalls.

The user tensions the side chains and cross chains by pulling on handle **16** while eliminating any snags and local twists with the other hand. This completes the draping operation, during which the flexibility of handle **16** provided by the resilient hose has helped to prevent tool **10** from hanging up on the body of the vehicle. The result is depicted in Fig. 31, which shows tire **302** mounted on rim **304** driven by axle **306,** and tool **10** connected to the fastening elements of the side chains. Tire **302** has tread **302a,** inner sidewall **302b,** and outer sidewall **302c.** Handle **16** is now bridging the tread of tire **302,** with the arms extending along opposite sidewalls. Claws **28, 44** of inner arm **12** are connected to inner fastening link **212L** of inner side chain **212.** Resilient sleeve **310** isolates fastening link **212L,** as previously mentioned with respect to loading the tray. The user (not shown) is standing on the side of the wheel away from the viewer, facing the viewer and the outer sidewall and holding handle **16** with his or her right hand much the same way as one would hold the body of a hardshell crab to avoid being pinched by the crab's claws.

Next, the outer fastening element on the free end of the tire chain lying in the front of the tray is picked up and hung loosely on the outer fastening element connected to the tool. Alternatively, hanger **76** may be pivoted away from handle **16** and the free outer fastening element hung on hook **77.** This reduces the weight of the free chain which the user must soon support when picking up and handling the inner fastening element and keeps the tire chain from inadvertently being allowed to fall behind the wheel.

Figs. 32 and 33 show what happens next for both cases -- when tool **10** is connected to links and when it is connected to hooks, respectively. The user picks up the free inner fastening element (or the tube surrounding the side chain links between it and the nearest cross chain) from the tray and brings it up into the channel formed by flanges **20b, 20c** and web **20a** of member **20** of inner arm **12.** Using the flanges **20b, 20c** as a guide, the user slides the free fastening element **(212L** or **212H)** toward the claws. When the fastening element contacts concave inclined surface **30c**, the user, feeling that it is close to the claws, moves it along that surface, whose concavity centers the fastening element as it approaches the claws. The fastening element **(212L** or **212H)** leaves surface **30c** and moves the remaining distance to the mating fastening element connected to the claws. As shown in Fig. 32, when the connected fastening element is link **212L,** mating hook **212H** passes above link **212L** (out of the longitudinal axis of arm **12**), remaining in contact with link **212L,** until the end **212He** of hook **212H** is within the interior of link **212L.** Then hook **212H** is withdrawn into its position of final engagement with link **212L,** which is conventional (not shown). The necessary passage of hook **212H** over link **212L** with adequate clearance is possible because of the relatively small portions of the link and its interior space which are obstructed by the claws, as previously described with respect to loading the tray. As shown in Fig. 33, when the connected fastening element is hook **212H,** link **212L** remains on the longitudinal axis of arm **12,** rides over (away from the tire) the end **212He** of hook **212H,** and is withdrawn to its conventional position of final engagement (not shown). At this point latch **32** is unlatched and latch top panel **32b** and the bottom surface of angular member **46** or handle **16** are squeezed as previously described, opening claws **28, 44** and releasing the fastening element **212L** or **212H** from inner arm **12.** The inner side chain is now fully connected.

The user then unhooks the loosely hanging outer fastening element **(214L** or **214H)** and connects it securely to the mating outer fastening element **(214H** or **214L)** connected to tool **10.** Squeezing latch top panel **70b** and the bottom surface of handle **16** releases the fastening element from claws **64, 82** as previously described. Alternatively, the fastening element may be released from the claws before the free fastening elements are connected. The outer side chain is now fully connected.

It will be understood that while it is advantageous to connect the inner fastening element and the mating element before the fastening element has been released from the claws, as shown in Figs. 32 and 33 and just described, the user may elect to reverse the sequence and release the fastening element from the claws first and then connect the two fastening elements without using the inner arm as a guide.

The other tire chain is installed on the other driving wheel in a similar manner, after which the tools and empty trays are stored and the vehicle is driven off the tray in the opposite direction, so that it goes back over the front of the tray. If the vehicle is inadvertently driven in the wrong direction and passes over rear wall **114** of tray **110,** the tray will not be damaged.

As previously mentioned in the summary of the invention, the tire chains can be installed in most cases without the need for the user to see the inner fastening elements being connected or to hold them with both hands simultaneously, which often has required the user to lie on the ground when installing tire chains in the conventional manner. There are several reasons. First, the user knows that the tool has prevented the side chain from twisting during storage, handling, or installation, since one end of the tire chain is still connected to the tool, the other end is still held by the chain element holder, and the tire chain the tool cannot be rotated about the axis of the handle, as could be possible with a more flexible or differently configured tool. Second, the tool positively fixes the location of the connected fastening element. Third, the tool guides the free fastening element into contact and engagement with the connected fastening element. Fourth, the tool prevents the connected fastening element from moving or rotating away from the free fastening element in response to pressure from it. Fifth, if the tool is connected to a fastening hook, the tool prevents the hook from snagging on another portion of the tire chain.

In addition, the invention eliminates the need for the user to have both hands holding the mating inner fastening elements at the inner sidewall, which, like the need to see the fastening links, could also require him or her to lie on the ground, since balancing on one's feet may be difficult under these circumstances. Instead, the user is able to see the latches, which are remote from the fastening elements being connected, and to apply tension to the inner side chain through the tool, which one hand (the hand lest able to reach the inner sidewall of the tire) is holding by the handle.

### Setup

In order to obtain the maximum benefit from the invention, it is important to stop the tire on the tray at the location which will place the fastening elements of the chain in the optimum angular position on the tire when the tire chains are properly tensioned on the sidewalls and the fastening elements are ready to be connected. Predetermining the location of switch **150** on front support **122,** as mentioned earlier, allows this optimum connection angle to be achieved.

The optimum connection angle will vary with the design of the particular vehicle. On some vehicles, particularly trucks, buses, graders, and other heavy equipment, clearance may not be a factor, either because the tires are sufficiently spaced from the vehicle's fenders or because there are no fenders at all. For these vehicles the optimum connection angle may be within the range of approximately 45° to 170° from the bottom of the tire, in the direction away from chain well **142.** An angle less than approximately 45° will place the fastening elements so close to the ground that arms **12, 14** of tool **10** cannot come close enough to the tangent of the side chain circle to enable inner arm **12** to properly guide the free fastening element to the mating element connected to the tool. An angle greater than 170° will prevent the chain from being properly draped on the tire. Within the range of 45° to 170°, the less the angle, the lower the user will have to reach, and if the angle is less than 90°, the farther around behind the tire. At the other end of this range, the greater the angle, the greater the weight of the free end of the chain to be lifted to the height of the connection.

For most other vehicles, including passenger cars, clearance will be a factor, and the connection angle will be limited to the lower angles of that range which place the elements being connected, or at least the handle of the tool and the knuckles of the user's hand gripping it, below the body of the vehicle. As a general rule, the connection should be made at about 90° or, if there is insufficient clearance at 90°, at the lesser connection angle which allows sufficient clearance for the connection to be made.

Unless there is a circumstance restricting movement of the vehicle, the user will have decided in advance whether to drive the vehicle onto the tray in low gear or reverse, based on the design of the body of the vehicle. The presence of mud guards close to the tire may militate for reverse, for example. If the vehicle is a passenger car or light truck with rear wheel drive, it usually will be preferable to drive it in low gear onto the tray. With front wheel drive passenger cars, the preferred practice varies greatly with the design of the front fenders, although these vehicles tend to be more forgiving than rear wheel drive vehicles, since the body is spaced sufficiently far from the front wheel to allow the wheel to turn fully to the right and left. (While the description of the invention has assumed for convenience that the tire chains are being installed on only drive wheels, this is not always the case, it being well known that tire chains may be used on non-drive wheels to enhance braking and steering.) The invention is not intended to be used for a tire which is already stuck.

The length of the sensing and signalling zone and the location of switch **150** should be predetermined for particular tires and tire chains at or before the first time the tire chains are loaded into the tray in anticipation of actual use.

The length of the sensing and signalling zone may be determined by trial and error without having the tire chains in the tray. As a starting point, adapter **181** should not be used, and the top surface of top element **152** should be coplanar with the top surface of front support left and right portions **122b, 122c,** so that top element **152** will be contacted by the part of the tire tread bulging down between front support left and right portions **122b, 122c.** The vehicle is then driven slowly onto the tray until switch **150** closes and then re-opens. The duration and length of the closing should be definite and discernable, but as brief as possible and repeatable. If the zone is too long, a shim under center section **122a** should be removed or adapter **181** should be installed as shown in Fig. 29. If the zone is too short or there is no signal, a shim should be added or adapter **181** should be installed as shown in Fig. 30.

To locate switch **150,** it is detached from support **122** and reattached as far as possible to the rear of support **122.** Next, the tray is loaded into the tray as shown in Fig. 17, with the endmost cross chain in front transverse channel **130.** The vehicle is then driven onto the tray and stopped when switch **150** is in the closed position shown in Fig. 27. If the resulting connection angle is too great, the vehicle should be driven toward the front end of the tray to produce a lesser angle. If, on the other hand, the resulting connection angle is too small, then the vehicle should be driven off the tray, the tire chain in the tray shifted so that the two endmost cross chains are in front transverse channel **130,** and switch **150** moved to a more forward location on support **122.** (The length of support **122** is selected so that the range of the possible positioning of switch **150** is roughly equal to the center-to-center spacing of the cross chains, which in the case of the ladder-type chains shown is 5.0 or 5.25 in. (127 or 133.35 mm.)) If necessary, more than two cross chains may be placed in channel **130.**

In any event, the user should by trial and error position the tire and actually drape the tire chains around the tire and tension them to achieve and confirm both the optimum connection angle and the optimum chain length (generally, as short as possible) and to put sleeves **310** on the ends of the side chains on which the fastening element is a link. Similarly, the optimum chain length should be determined for, and sleeves applied to, the other tire chain of the set and its tire. As mentioned earlier, only the tray on the driver's side will employ a switch. If the two tire chains in the set are identical to each other rather than mirror images of each other, as discussed earlier in the description of the tool, the user needs to take into account the distance, on the tire chain of the pair which will be in the tray without the switch, between the fastening element at the free end of the side chain (i.e., the end in chain element holder **119**) and the closest cross chain. If that distance is appreciably longer than the corresponding distance on the tire chain in the tray with the switch, the optimum connection angle to be achieved by the switch should be reduced accordingly.

Next, with the tire at the position which will result in the optimum connection angle, switch **150** should be moved and secured to support **122** so that it contacts the rear profile of the tire, as shown in Fig. 31.

It should be noted that as a practical matter there is some latitude in achieving the optimum connection angle, since the tire chain laid out in the tray can be slid toward the front or rear of the tray after the tire has stopped. Such sliding is limited to the distance between the vehicle supports, which is about 2.25 in. (57.15 mm.) in the embodiment shown in Fig. 17. This equates to a total of approximately 12°, or a tolerance of ± 6°, for a typical passenger car tire having a diameter of 24 in. (609.6 mm.). The sliding is limited by the widest portions of supports **124** and **126,** which keep the cross chain hooks from sliding past them or becoming stuck between a support **124, 126** and a side wall **116.** Before the chains are slid, the cross chain(s) in transverse channel **130** should be placed over the front of support **122;** otherwise, a relatively short cross chain may catch on the front surface of support **122** if the tire chain is being slid toward the rear of the tray.

Additional advance preparation will further simplify loading and installation. The chains and tool may be painted or otherwise marked so that the fastening elements and the corresponding tool arm can be quickly identified. I recommend painting the inner fastening elements and tool arms one color and the outer fastening elements and tool arms a contrasting color. Also, to identify and distinguish the side chains, the outer side chain links to which the tensioners will be connected can be painted the outer color.

### Signalling the Driver

The selection of the particular means to signal the driver is primarily a function of expense.

An effective and convenient signal is a light on the vehicle's instrument panel which is illuminated when the tire is in the zone. Such a light would be actuated by a remote keyless entry-type device and battery in compartment **184,** in accordance with known technology.

Alternatively, an electronic device for emitting an audible sound, could be placed in compartment **184** with a battery, preferably with a manual on-off switch in the circuit with switch **150** so that the user could turn off the sound as soon as he leaves the stopped vehicle, thereby sparing himself and others the annoyance of having to listen to it for an extended period. A chip in the device which automatically turns off the sound at a fixed interval after it begins would serve the same purpose. Suitable piezo and electromagnetic buzzers and sirens are available from Radio Shack, U.S. Electronics, Inc., St. Louis, MO, and, Kayer Industrial Co., Ltd., Hong Kong.

An inexpensive third alternative is a light wired to one pair of terminals **180** and placed in the driver's view. An example is an ordinary flashlight wired with terminals **180** in parallel with the flashlight's own on-off switch. Alternatively, a jack with an integral normally closed switch can be substituted for terminals **180,** in series with the on-off switch. The flashlight can be attached to the driver's front fender with a magnet or, if the tray is at a rear wheel, to the side of vehicle to the rear of the driver and directed to the outside rear view mirror. Such a flashlight can carry its own battery. If the flashlight has plug-in jacks for the wires, it may be used as a normal flashlight when it is not being used with the tray. Examples of flashlights with suitable jacks are the continuity tester flashlights available from Bright Star Industries, Wilkes-Barre, PA. As an alternative to a magnet, the light can be attached to the windshield or other window glass by a suction cup. Clear suction cups of the type available from Presto Galaxy Suction Cups, Inc, Greenpoint, NY allow an embedded or adjacent L.E.D. or small incandescent lamp to be seen through the suction cup and the glass.

### Dimensions

The length of arms **12, 14** should be sufficient to allow the claws to place the fastening links at the widest part of the tire, while the arms are held more or less in alignment with the end links of the side chain and tangent to the side chain circle. This enables the user to pull on handle **16** to properly tension the side chains and cross chains, as mentioned above. On the other hand, the length of arms **12, 14** should be no longer than necessary, to minimize the possibility of interference between the tool and the vehicle and to keep the length of tray **110** to a minimum. I have found that an arm length in the range of from 4 to 6 in. (101.6 to 152.4 mm.) is suitable for typical passenger car tires ranging from 13 to 16 in. (330.2 to 406.4 mm.) bead diameter and from 6.75 to 9.25 in. (171.45 to 234.95 mm.) maximum width. An arm length of 4.75 in. (120.65 mm.) is a good compromise which will enable a single tool to work with most passenger car tires.

The spacing between arms **12, 14** should be greater than the maximum width of the tire but not so great as to cause interference with the vehicle. The optimum is approximately the maximum width of the tire plus 1.0 in. (25.4 mm.). The spacing of arms **12, 14** can be easily changed by cutting or replacing the resilient member of handle **16.**

The angle at the juncture of each arm and the handle and the rigidity of the tool there prevent the handle from being rotatable about its own longitudinal axis, because the tool cannot pass through the polygon formed by the tool, the closest cross chain, and the side chains between them. Such rotation would twist the side chains. This angle should be from 45° to 90°, and, to conform to the profile of most passenger car tires, is preferably about 60°.

The minimum interior width of the tray (i.e., the distance between the interior surfaces of side walls **116,** which is the width of tool compartment **144**) should be sufficient to allow the tool to fit between them, and thus should be in the range of about 8.0 to 11.0 in. (203.2 to 279.4 mm.) for the passenger car tire sizes mentioned above. These widths are sufficient to prevent the tire from trapping a side chain in a longitudinal channel **138,** unless the path of the tire is badly misaligned with the tray. Excess tray width has no disadvantage other than cumbersomeness. The distance between transverse channels **130, 132, 134, 136** should correspond to the distance between the cross chains as measured along a side chain (conventionally 5.0 or 5.25 in. (127 or 133.35 mm.)). The length of tool compartment **144,** measured as an orthogonal projection of the tool onto the longitudinal axis of the tray, should be the tool arm length plus about 1.0 in. (25.4 mm.) to accommodate handle **16** and angular member **84.** Thus, the tool compartment length should be in the range of about 5 to 7 in. (127 to 177.8 mm.) for typical passenger car tires. The height of tool compartment **144,** measured to from the top of walls **116, 140** to the floor of the compartment at base **112,** should be at least the height of tool **10,** which is 1.0 in. (25.4 mm.) as shown in the drawings. The depth of tool compartment **144** should be in the range of about 0.75 to 1.5 in. (19.05 to 38.1 mm.).

### Construction Details

In the preferred embodiment shown and described, tool **10** is made from 0.125 x 1.0 in. (3.175 x 25.4 mm.) steel bar, .0625 x 1.0 in. (1.5875 x 25.4 mm.) square steel tube, 0.75 in. (19.05 mm.) outside diameter radiator hose, and 0.50 in. (12.7 mm.) plexiglass sheet for rigid platform **166',** while tray **110** is made from wood of 0.75 and 1.5 in. (19.05 and 38.1 mm.) thicknesses. In another embodiment of the installation tool a hinged wood handle is used. Switch **150** is made from square metal angle, plexiglass sheet for rigid platform **166,** shoe insole material for resilient pad **168,** all 0.125 in. (3.175 mm.) thick, and bicycle inner tube for resilient compression band **170** and the sleeve stretched around portions of the angular members. Interior walls **140** are made from metal channel 0.125 in. (3.175 mm.) thick. It will be understood that these materials and other construction details have been described with particularity in order to provide a full disclosure of an operating embodiment of the invention, not to suggest the ultimate refinement of a tool or a tray embodying the principles of the invention. Of course, the tool and tray could be made of other materials, including recycled materials. For production on a commercial scale which would justify substantial capital investment, for example, tool **10** could be made by injection molding a suitable polymeric resin, such as polypropylene or nylon, which may be fiber-reinforced. It may be possible to form the claws and/or hinged handle integrally with the arm members. The tray could also be molded from a similar such resin. It will be further understood that the designs of the tool and tray can and would be expected to be changed to accommodate, and take advantage of, the different materials, while continuing to use the fundamental principles and relationships described herein.

### Other Alternative Embodiments

In an alternative embodiment of the installation tool, the outer claws can be similar to the inner claws, but with grooves in the claws shaped to receive either a chain link or the curved, J-shaped end portion of the locking hook, for example flat locking hook **214H;** this embodiment facilitates the connection of the fastening elements when the fastening link is being held by the outer claws. In another alternative embodiment of the installation tool, the handle can be offset from the plane of the arms, so that it would appear to be all or part of an inverted "U" in a complete front view of the tool shown in Fig. 1. This would enable the rear of the arms, like the front of the arms, to be disposed along the sidewalls inwardly of the tread, thereby being closer to the free fastening element which will be guided along the inner arm, but at the expense of increasing the height of the tool and hence the tool compartment in the tray. The arms could be curved so they lie along the side chain circle. In an additional alternative embodiment, handle **16** telescopes in two places -- between hinge **90** and angular member **46** and between hinge **90** and angular member **84** -- so that the distance between arms **12, 14** may be reduced while tool **10** is stored in tray **110.** This eliminates the width of tool **10** as the factor determining the width of tray **110**, as previously described in the discussion of dimensions, in which case the width of tray **110** should be at least the maximum width of the tire.

In an alternative embodiment of the tray, the vehicle supports are shaped to correspond to the spaces between cross chains in a Z or diamond configuration, rather than a ladder configuration, so that the transverse channels are diagonal with respect to the longitudinal channels rather than perpendicular. The cross chains may also have other configurations and may include elements which are not chain links, as shown for example in Zeiser et al U.S. patent 4,889,172 and Baldry U.S. patent 4,357,975.

It will be understood that, while presently preferred embodiments of the invention have been illustrated and described, the invention is not limited thereto, but may be otherwise variously embodied within the scope of the following claims. It will also be understood that the method claims are not intended to be limited to the particular sequence in which the method steps are listed therein, unless specifically stated therein or required by description set forth in the steps.

## Claims

1. A U-shaped tool for installing, on a tire mounted on a rim of a vehicle wheel, a tire chain consisting of elements which form side chains and cross chains extending between the side chains, the tire having a tread joining an inner sidewall and an outer sidewall, and the elements comprising links and, at one end of each side chain, a fastening hook for connection with a mating element at the other end of that side chain, which tool, being easily connectable to and removable from the tire chain, comprises
(a) a transverse handle member;
(b) two arms extending away from the transverse member and spaced from each other so that when the tool is placed over the tire the transverse member will bridge the tread of the tire and each arm will extend along a sidewall of the tire; and
(c) a clasp mechanism on at least one of the arms for engaging and connecting the arm to an element of a side chain, the clasp mechanism comprising components which are relatively movable to both
(i) a first, confining configuration in which the clasp mechanism will confine an element of the side chain and
(ii) a second, releasing configuration in which the clasp mechanism will release that element in response to actuation by the user.

2. A tool according to claim 1 wherein in the confining configuration the clasp mechanism will confine the side chain element in such a manner that the arm will remain connected to the element during storage, handling, and installation of the tire chain, irrespective of the relative positions of the element and the arm and irrespective of the directions of forces pulling on them.

3. A tool according to claim 1 or 2 wherein the components of the clasp mechanism are configured and dimensioned so that the clasp mechanism will restrain the element and hold it in an exposed position, so that a mating element at the opposite end of the side chain can be connected to the restrained element while the arm is still connected to the restrained element.

4. A tool according to claim 1, 2 or 3 wherein an arm has, on its surface opposite the transverse member, a longitudinal guide for guiding an element of the tire chain into contact with a mating tire chain element being held by the clasp mechanism.

5. A tool according to any preceding claim which further comprises a locking device which when locked keeps the clasp mechanism in the confining configuration and when unlocked allows the clasp mechanism to move to the releasing configuration.

6. A tool according to claim 5 wherein the lock is a latch which, when in the unlatched position, extends away from the arm and provides a bearing surface for the application of a squeezing force to separate the components of the clasp mechanism.

7. A tool according to claim 5 or 6 wherein the latch, when in the latched position, lies closely against the arm.

8. A tool according to any preceding claim wherein each arm has a said clasp mechanism.

9. A tool according to any preceding claim wherein the transverse member is articulated to permit the two clasp mechanisms of the two arms to be moved close to each other.

10. In combination with a tool according to any preceding claim, a tire chain installation tray which comprises
(a) a base with a longitudinal axis;
(b) walls and vehicle supports projecting upwardly from the base and defining longitudinal channels and transverse channels for receiving and confining a laid-out portion of the tire chains;
(c) a well for receiving and holding a portion of the tire chain which is not laid out; and
(d) a tool compartment adjacent the well for receiving and holding said tool and protecting said tool from damage due to the weight of the vehicle.
